Europäisches Patentamt

European Patent Office

Office européen des brevets

(19)

(11) Veröffentlichungsnummer: **0 137 511**
**A2**

(12) **EUROPÄISCHE PATENTANMELDUNG**

(21) Anmeldenummer: **84112287.2**

(22) Anmeldetag: **12.10.84**

(51) Int. Cl.⁴: **A 01 K 41/00**

(30) Priorität: **13.10.83 DE 3337237**

(43) Veröffentlichungstag der Anmeldung:
**17.04.85 Patentblatt 85/16**

(84) Benannte Vertragsstaaten:
**BE CH DE FR IT LI NL**

(71) Anmelder: **Grumbach, Emil**
**Gartenstrasse 2**
**D-6330 Wetzlar 13(DE)**

(72) Erfinder: **Grumbach, Emil**
**Gartenstrasse 2**
**D-6330 Wetzlar 13(DE)**

(74) Vertreter: **Missling, Arne, Dipl.-Ing. et al,**
**Patentanwälte Dipl.-Ing. R. Schlee Dipl.-Ing. A. Missling**
**Bismarckstrasse 43**
**D-6300 Giessen(DE)**

(54) **Brut- und Schlupfgeräte.**

(57) Brut- und Schlupfgeräte für das Bebrüten beliebiger Eisorten mit einem geschlossenen Gehäuse sollen so konstruiert sein, daß die Brut im gesamten Gerät gleichen Bedingungen ausgesetzt ist. Hierzu wird ein Brutgerät verwendet, das ein im wesentlichen rechteck- oder quadratförmiges Gehäuse aufweist, welches durch Querwände (2) in einen Brutraum (7) und luftführende Räume getrennt ist, wobei die Querwände (2) Luftkanäle (3) mit in etwa gleichförmigen und gleich großen Querschnitten abteilen. Die Luftkanäle (3) enden offen unter der untersten Bruthorde (8) in gleichem Abstand zum Boden (13) bzw. rechts und links seitlich neben der Bruthorde. Über mit einer Heizquelle versehene Ventilatoren (4), die zentral oben oder hinten von links und rechts im selben Abstand zu den Luftöffnungen (6) angeordnet sind, wird die Luft erwärmt und umgewälzt. Zwischen dem Ventilator (4) und dem Brutraum (7) ist ein Staubfilter (10) angeordnet, wobei die Kanäle für die Be- und Entlüftung (17) sowie die Kanäle (16) für die Befeuchtung jeweils auf die Saugseite im Raum zwischen Staubfilter (10) und Ventilator (4) und auf die Druckseite im Raum (15) führen. Die Kanäle sind mit einem beheizbaren Wassertank verbunden, wodurch die Luft entsprechend der Wassertemperatur mit Feuchtigkeit angereichert wird.

FIG. 1

Croydon Printing Company Ltd.

EP 0 137 511 A2

Emil Grumbach,
Gartenstraße 2, 6330 Wetzlar 13

Brut- und Schlupfgeräte

Die Erfindung betrifft ein Brut- und Schlupfgerät für
das Bebrüten von Eiern beliebiger Arten bis zum Schlüpfen.

Es sind Geräte in verschiedenen Arten und Ausführungen
bekannt. Vorliegende Erfindung lag die Aufgabe zu Grunde
auch hochempfindliches Eigut mit äußerster exakter
Temperatur und Luftfeuchte zu bebrüten um die Ergebnisse
von Naturbrut zu übertreffen, dabei war es wesentliche
Aufgabe, daß die Bedingungen im gesamten Brutraum eingehalten werden, d. h. daß Temperaturabweichungen unter
0,3° C liegen. Ein weiteres Merkmal ist, zu verhindern,
daß der beim Schlupf der Tiere anfallende Staub nicht
im ganzen Gerät verteilt wird. Alle bekannten Geräte
weisen hier Schwachstellen auf.

Diese Aufgabe wird durch ein Brut- und Schlupfgerät
gemäß dem kennzeichnenden Teil des Anspruches 1 gelöst.

Erfindungsgemäße Brut- und Schlupfgeräte haben ein
im wesentlichen rechteckförmiges oder quadratisches
Gehäuse, in welchem eine oder mehrere Bruthorden im
entsprechenden oder verstellbarem Abstand übereinanderliegend angeordnet sind, vorteilhaft dabei ist,
daß ein oder mehrere Ventilatoren mit Heizquellen
so angeordnet sind, daß der Luftweg nach allen Richtungen annähernd gleichmäßig groß ist. Ebenfalls muß die Luft vorteilhaft so zwangsgeführt werden, daß diese in gleichmäßiger Geschwindigkeit, Menge und Temperatur das Eigut umstreicht. Dies wird je nach Brutraumhöhe und Größe vertikal oder horizontal erreicht. Horizontal = Vorteilhaft bei Bruträumen unter 40 cm Höhe, hier wird der thermische Auftrieb noch nicht so stark wirksam, daß aus diesem Grund Temperaturunterschiede auftreten.
Bei größeren Höhen werden der oder die Ventilatoren vorteilhaft oben zentral angeordnet und die Luft zwangsmäßig beidseitig in gleichgroßen Kanälen nach unten gedrückt um durch die mit gasdurchlässigen Böden ausgestatteten Eihorden gleichmäßig nach oben zu strömen.
Beim Schlüpfen der Tiere wird feiner Staub vermischt mit Hährchen frei, damit dieses nicht im ganzen Gerät verteilt wird, ist auf der Saugseite der Ventilatoren ein Filter angeordnet. Dieser bewirkt gleichzeitig einen kleinen Unterdruck im Raum zwischen Filter und Ventilator. In diesem Raum führen Anschlüsse für die Befeuchtung und für Frischluft, weitere Anschlüsse befinden sich auf der Druckseite der oder des Ventilators, so daß speziell die Luftbefeuchtung hierdurch positiv beeinflußt wird, d.h. es werden hier bei Wassertemperaturen unter 50° C über 80 % Luftfeuchtigkeit, bei ca. 37,8° C Lufttemperatur erreicht. Durch die vorteilhafte Führung der Zuluft in den Bereich zwischen Filter und Ventilator wird eine gleichmäßige Verteilung der Frischluft und auch bei Auskühlphasen ein gleichmäßig kühler Luftstrom erreicht. Ausbildung der Brut- und Schlupfhorden mit gasdurchlässigem Boden sind im wesentlichen bekannt, ebenfalls kann eine automatische Wendeeinrichtung wie in unserer Patentanmeldung P 32 43600.9 beschrieben, eingebaut sein. Auch können die Horden so angeordnet sein, daß sich diese jeweils nach links oder rechts kippen lassen, dieses Kippen kann von Hand oder durch Motor erfolgen. Kippen und Wenden der Eier ist notwendig um ein Ankleben des Embrios im Eiinneren zu verhindern.
Ausführungsbeispiele der Erfindung sind in folgendem anhand der Zeichnungen 1 und 2 näher beschrieben, in diesen zeigen:

Fig. 1   Vordersicht im Schnitt durch ein Brut-
         und Aufzuchtgerät mit vertikaler Luftführung,

Fig. 2   Seitenansicht nach Schnitt AB,

Fig. 3   Querschnitt durch dieses Brut- und Aufzuchtgerät nach Schnitt CD,

Fig. 4   Querschnitt nach Schnitt E - F,

Fig. 5   die Vordersicht eines Brut- und Schlupfgerätes
         mit horizontaler Luftführung und waagerecht
         liegenden Horden im Schnitt,

Fig. 6   die Vordersicht derselben Ausführung nach

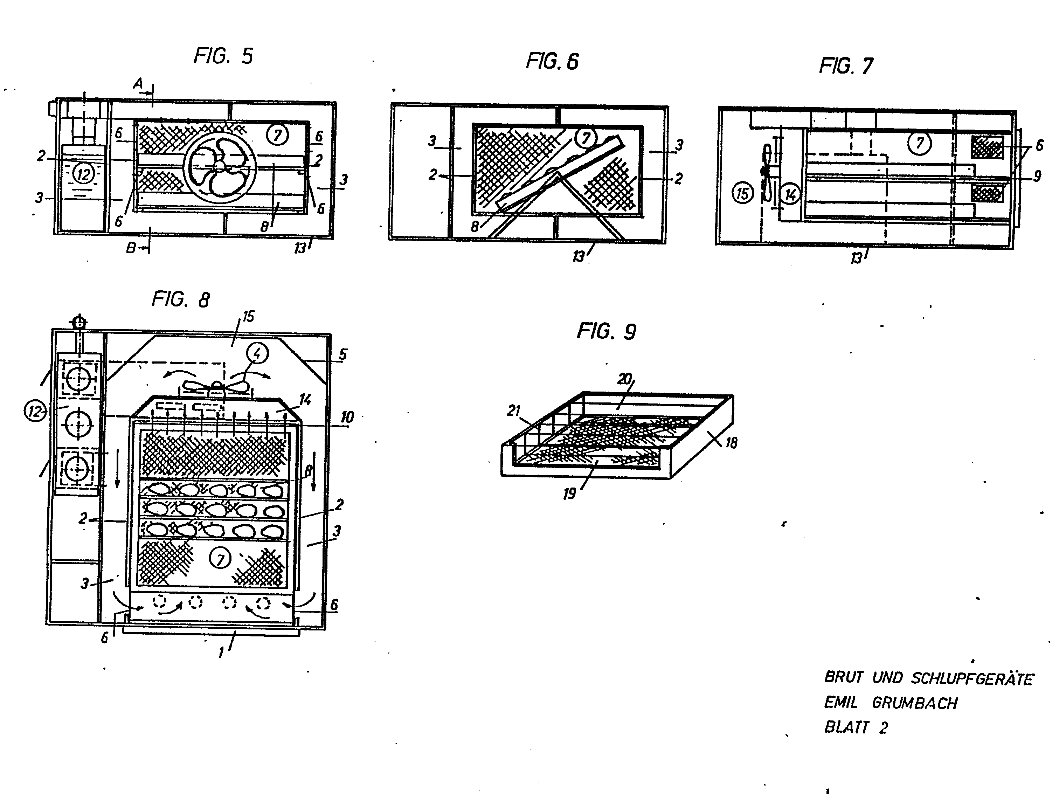

         Fig. 5 mit kippbar gelagerter Horde im Schnitt,

Fig. 7   Seitenansicht im Schnitt nach A und B
         nach Fig. 5,

Fig. 8   den Querschnitt durch das Gerät nach Fig. 5
         und

Fig. 9   eine Ansicht einer Schlupfhorde.

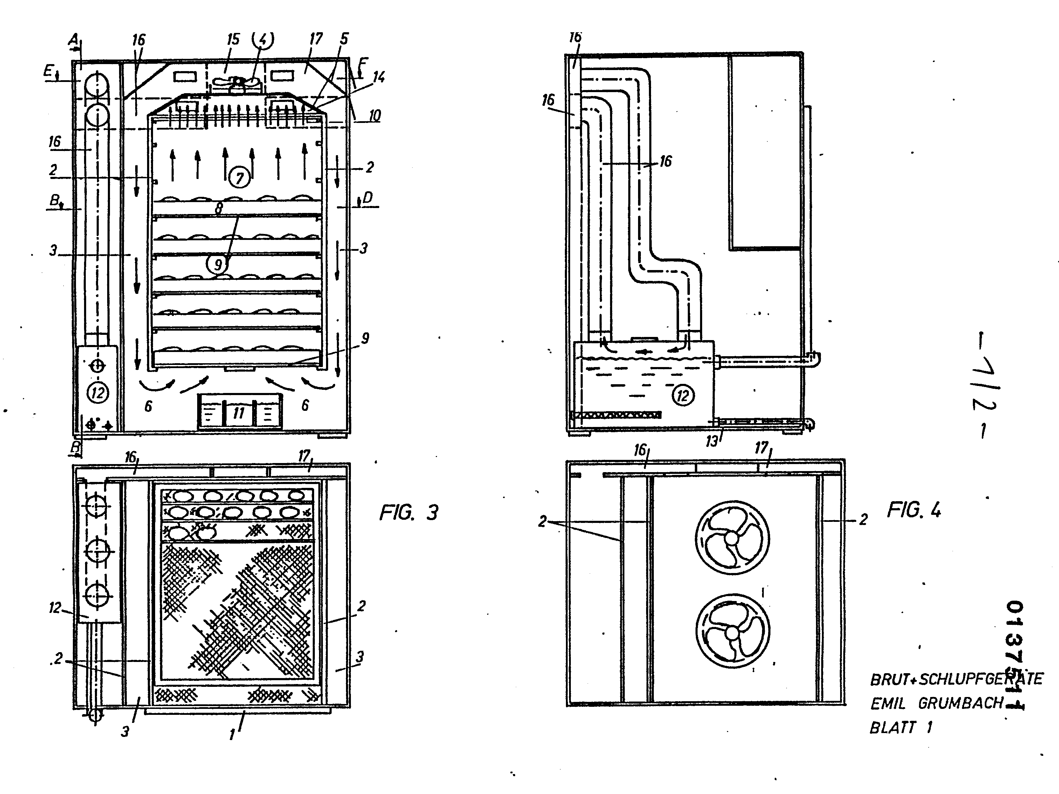

Die in den Fig. 1 und 5 gezeigten Brut- und Schlupfgeräte
haben rechteckförmige Gehäuse, die mittels einer Tür 1
verschließbar sind. Das Innere der Gehäuse ist mit Querwänden 2 so abgeteilt, daß sich ungefähr genau gleichmäßig große Seitenkanäle 3 für die Luftführung ergeben.
Zentral und im gleichen Abstand zu den Seitenkanälen hin
sind ein oder mehrere Ventilatoren 4 mit Heizwiderstand
montiert, welche die erwärmte Luft in den Umlauf bringen,
die Abschrägungen bildenden Querwände 5 sind aus strömungstechnischen Gründen eingebaut.

- 4 -                                    0137511

Die Seitenkanäle 3 sind je nachdem ob die Luft vertikal
oder horizontal geführt wird, unten offen oder seitlich
mit Luftöffnungen 6 versehen, durch welche die erwärmte
Luft gleichmäßig in den Brutraum 7 geführt wird.

Im Brutraum 7 sind die Horden 8 für die Eier horizontal
verschiebbar oder kippbar wie in Fig.6 angeordnet. Die Böden der Horden 8 sowie die Auflagerahmen 9 sind gasdurchlässig ausgebildet. Bei der Ausführung nach Fig. 1, 2, 3, 5
und 8 können, wie in Fig.7 gezeigt, diese auch gasundurchlässig sein, da die Luftführung dies hierbei zuläßt. Dies
ist speziell beim Schlupf der Tiere vorteilhaft.

Im Brutraum 7 ist je nach Luftführung und Anordnung des Ventilators 4 (oben oder auf der Rückseite) vor demselben ein
Staubfilter 10 angeordnet.

Die Befeuchtung erfolgt über eine Verdampferschale 11 und/
oder über einen beheizbaren Wassertank 12, welcher über Kanäle 16, die zur Saug- und Druckseite der Ventilatoren 4
führen, mit Luft durchspült werden. So wird entsprechend
der Wassertemperatur die gewünschte Luftfeuchtigkeit erreicht.

Fig.9 zeigt eine Schlupfhorde, die seitlich erhöht und
mit durchsichtigen Querwänden unterteilt ist. Die ausgeschlüpften Tiere bleiben so voneinander getrennt.

Ansprüche:

1. Brut- und Schlupfgerät für das Bebrüten beliebiger Eisorten mit einem geschlossenen Gehäuse, dessen Brutraum
für eine oder mehrere übereinanderliegende Bruthorden ausgelegt und über eine Türe verschließbar ist, dadurch gekennzeichnet, daß das Brutgerät ein im wesentlichen rechteck- oder quadratförmiges Gehäuse aufweist, welches durch
Querwände (2) in einen Brutraum (7) und luftführende Räume
getrennt ist, wobei die Querwände (2) Luftkanäle (3) mit in
etwa gleichförmigen und gleich großen Querschnitten ergeben,daß
die Luftkanäle (3) (in Fig.1) offen unter der untersten Bruthorde (8) in gleichmäßigem Abstand zum Boden (13) bzw.
(Fig.5, 6,7 und 8) rechts und links vorne seitlich, entweder
offen oder in durch Gitter geschützten Luftöffnungen (6)
enden, daß der oder die Ventilator(en) (4) mit Heizquelle
zentral oben oder hinten von links und rechts im selben Abstand zu den Luftöffnungen (6) angeordnet sind, daß zwischen
Ventilator (4) und Brutraum (7) ein Staubfilter (10) angeordnet ist, wobei die Kanäle für die Be- und Entlüftung
(17) sowie die Kanäle (16) für die Befeuchtung jeweils auf
die Saugseite im Raum zwischen Staubfilter (10) und Ventilator (4) und auf die Druckseite im Raum (15) führen und
daß die Kanäle (16) dabei mit dem heizbaren Wassertank (12)
verbunden sind, daß der Druckunterschied zwischen Saug-
und Druckseite des Ventilators (4) eine Durchspülung mit
Luft bewirkt, wobei diese Luft entsprechend der Wassertemperatur mit Feuchtigkeit angereichert wird.

2. Brut- und Schlupfgerät nach Anspruch 1, dadurch gekennzeichnet, daß zur Befeuchtung bei Ausfall der Tankheizung
oder bei Geräten einfacher Ausführung, bei denen eine
relative Luftfeuchtigkeit bis 70 % genügt, eine oder mehrere Verdampferschalen (11) innen auf dem Boden, links oder rechts, in gleichen Abständen angeordnet sind.

3. Brut- und Schlupfgerät nach Anspruch 1 oder 2, dadurch gekennzeichnet, daß der oder die Ventilatoren (4) zentral oberhalb der Bruthorden (8) angeordnet sind und zwei gleichgroße und gleichförmige Luftkanäle (3) nach unten bis unter die Horden (8) führen und dort mit gleichgroßen Luftöffnungen (6) versehen sind.

4. Brut- und Schlupfgerät nach Anspruch 1, dadurch gekennzeichnet, daß der oder die Ventilator(en) (4) rückseitig zentral angeordnet sind und die Seitenkanäle (3) vorn, rechts und links in der Nähe der Tür (1) mit Luftöffnungen versehen sind.

5. Brut- und Schlupfgerät nach einem der Ansprüche 1 bis 3, dadurch gekennzeichnet, daß zwischen Ventilator (4) und Brutraum (7) ein Staubfilter (10) angeordnet ist.

6. Brut- und Schlupfgerät nach Anspruch 1, dadurch gekennzeichnet, daß neben Wendehorden auch Schlupfhorden (Fig.9) einsetzbar sind, welche bei den Geräten mit Ventilator (4) oben mit gasdurchlässigem Boden und bei horizontaler Luftführung mit dichtem Boden ausgestattet sind, daß die vordere Wand (19) sowie die verstellbaren, in Rasterführungen (21) einsetzbaren Trennwände (20) aus durchsichtigem Material ausgeführt sind.

7. Brut- und Schlupfgerät nach einem der Ansprüche 1 bis 4, dadurch gekennzeichnet, daß ein beheizbarer

0137511

Wassertank (12) mit zwei Anschlüssen versehen ist, an denen  Kanäle (16) derart angeschlossen sind, daß ein Kanal (16) zur Druckseite und der andere zur Saugseite des Ventilators (4) führt und daß die Steuerung der relativen Luftfeuchte über die regulierbare Wasserbeheizung erfolgt.

8. Brut- und Schlupfgerät nach einem der Ansprüche 1 bis 7, dadurch gekennzeichnet, daß die Horde (8) seitlich hochgezogene Wände und Querunterteilungen aufweist.

9. Brut- und Schlupfgerät nach Anspruch 8, dadurch gekennzeichnet, daß die Querwände und Vorder- und/oder Rückwand aus einem durchsichtigen Material bestehen.

FIG. 3

FIG. 4

0137511

BRUT+SCHLUPFGERÄTE
EMIL GRUMBACH
BLATT 1

-1/2-

FIG. 5

FIG. 6

FIG. 7

FIG. 8

FIG. 9

0137511

BRUT UND SCHLUPFGERÄTE
EMIL GRUMBACH
BLATT 2